# EUROPEAN PATENT APPLICATION

(11) **EP 1 758 021 A2**
(43) Date of publication of application: **28.02.2007**
(21) Application number: 06119482.5
(22) Date of filing: 24.08.2006
(51) Int. Cl.: G06F 9/54

(54) **Method or apparatus for managing a server process in a computer system**

(30) Priority: 25.08.2005 EP 05405493
(71) Applicant: International Business Machines Corporation, Armonk, N.Y. 10504 (US)
(72) Inventor: Garg, Ashish, Tonawanda, 14150 (US); Julisch, Klaus, White Plains, NY 10606 (US); Soghoian, Christopher A., Charlottesville, VA 22901 (US); Tanner, Axel, 8802, Kilchberg (CH)
(74) Representative: Meyer, Michael Josef

(57) **Abstract**

A method and apparatus for running a server program are disclosed in which a first instance (301, 303) of a server program is run on a first machine (203/301) and communications are routed from client processes to that first machine (203/301). A second instance (305, 303) of the server program is then started on a second machine (203/305) and after a predetermined period subsequent communications from client processes are re-routed to the second machine (203/305).

## Description

### Field of Invention

The present invention relates to a method or apparatus for managing a server process in a computer system.

### Background of the Invention

Attacks against computer systems typically come in two varieties. In the first, attackers gain access to a vulnerable machine, steal information and then abandon the machine. The second variety involves breaking into a vulnerable machine and placing a mechanism known as a backdoor in the machine which provides for further unauthorized access. A compromised computer can then be used to launch network attacks such as denial of service (DOS) attacks or send unsolicited e-mails often referred to as spam. Unauthorized users of a computer may also carry out undesirable modifications to the software systems or data on the computer.

High power servers with access to high speed internet connections are appealing to hackers. Such servers are able to cope with the amount of data involved in attacks such as sending out millions of spam messages or participating in a DOS attack. Access to such compromised servers is often traded between hackers for significant sums of money. Current security techniques for computer systems provide access controls and also monitor the use of the computer in an attempt to identify unauthorized or suspicious user behavior. Nevertheless, the commercial value of a compromised machine encourages attempts to overcome available security measures, gain access and damage security and integrity of the computer system.

### Summary of the Invention

According to some embodiments there is provided a method for managing a server process in a computer system, the method comprising the steps of:
a) running a first instance of a server process on a first machine;
b) routing communications from client processes to the first machine;
c) starting a second instance of the server process on a second machine; and
d) routing subsequent communications from client processes to the second machine after a period of running of the first instance by the first machine.

Each instance of the server process may be provided by a virtual application server. Each machine may be a virtual machine. Each machine may comprise one or more physical processors. Step d) may be triggered when a predetermined switch-over period has elapsed. The switch-over period may be determined randomly. The server or said first and second machines may be monitored for unauthorized activity and step d) may be triggered by the detection of any such activity

A third instance of the server process may be started on a third machine and subsequent communications re-routed from client processes to the third machine after a period determined by the time taken for the detection of unauthorized activity on the first machine. The first instance of the server process may be stopped after step d). The first machine may also be stopped. Once a server process or machine is stopped its related data and files may be analyzed to detect unauthorized activity.

After step d) the first instance of the server process may be allowed to complete existing client communications prior to ceasing processing. After step d) the first instance of the server process may be allowed to continue processing existing client communications for a cut-off period. The cut-off period may be predetermined. The length of the cut-off period may be determined randomly. The cut-off period may be derived from the average processing time of client communications.

According to other embodiments there is provided an apparatus for managing a server process in a computer system, the apparatus comprising:
a first machine for running a first instance of a server process;
a controller operable to route communications from client processes to the first machine;
a second machine for running a second instance of the server process subsequent to the first instance; and
the controller being further operable to route subsequent communications from client processes to the second machine after a period of running of the first instance by the first machine.

According to further embodiments there is provided a method of running a server program, the method comprising the steps of:
a) running a first instance of a server program on a first virtual machine (VM) and routing communications from client processes to the first VM; and
b) starting a second instance of the server program on a second VM and after a predetermined period re-routing subsequent communications from client processes to the second VM.

According to other embodiments there is provided a computer program comprising instructions for carrying out a method of managing a server process when said computer program is executed on a computer system (101), the method comprising the steps of:
a) running a first instance of a server process on a first machine;
b) routing communications from client processes to the first machine;
c) starting a second instance of the server process on a second machine; and
d) routing subsequent communications from client processes to the second machine after a period of running of the first instance by the first machine.

According to some embodiments there is provided a computer program comprising instructions for carrying out a method of running a server program when said computer program is executed on a computer system (101), the method comprising the steps of:
a) running a first instance of a server program on a first virtual machine (VM) and routing communications from client processes to the first VM; and
b) starting a second instance of the server program on a second VM and after a predetermined period re-routing subsequent communications from client processes to the second VM.

### Brief Description of the Drawings

Embodiments of the invention will now be described, by way of example only, with reference to the accompanying drawings in which:
Figure 1 is a schematic illustration of a computer system;
Figure 2 is a schematic illustration of functional blocks in one of the computers in the computer system of figure 1; and
Figure 3 is a flow chart illustrating processing carried out in the computer of figure 2.

### Detailed Description of Embodiments

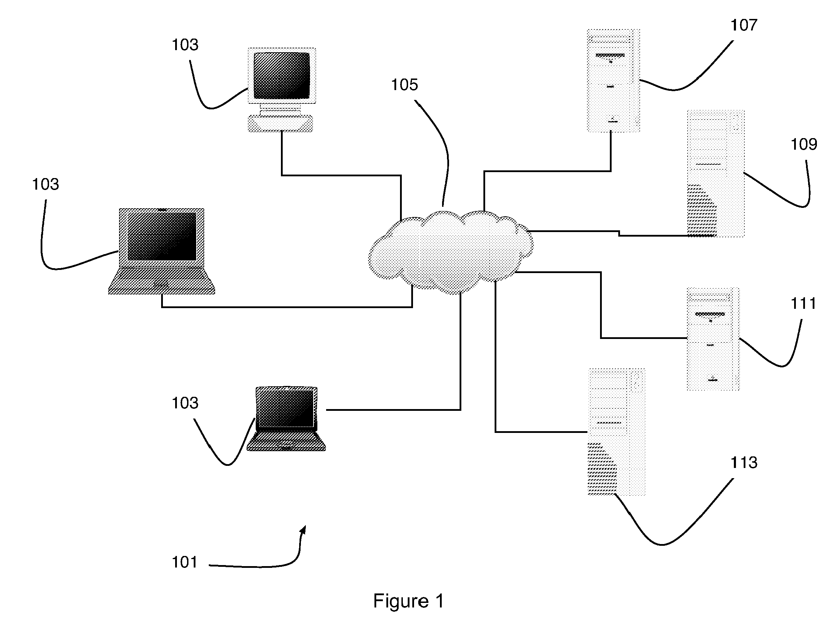

With reference to figure 1, a computer system 101 comprises a set of client computers 103 connected by a wide area network (WAN) 105 to a set of server computers 107, 109, 111, 113. The client computers 103 run client software such as e-mail clients or web browsers which enable access to data and services provided by the server computers via application server software. Each server computer 107, 109, 111, 113 runs access control software designed to restrict access to their software and data to only authorized users. Each client computer 103 can access any one of the server computers 107, 109, 111, 113 via the network 105. However, any one of the client computers 103 may be used to attempt to gain unauthorized access via hacking techniques to any one of the server computers 107, 109, 111, 113. Any successful unauthorized access may result in damage to software or data on the compromised server or the server being used as the source of further attacks such as sending spam or carrying out DOS attacks.

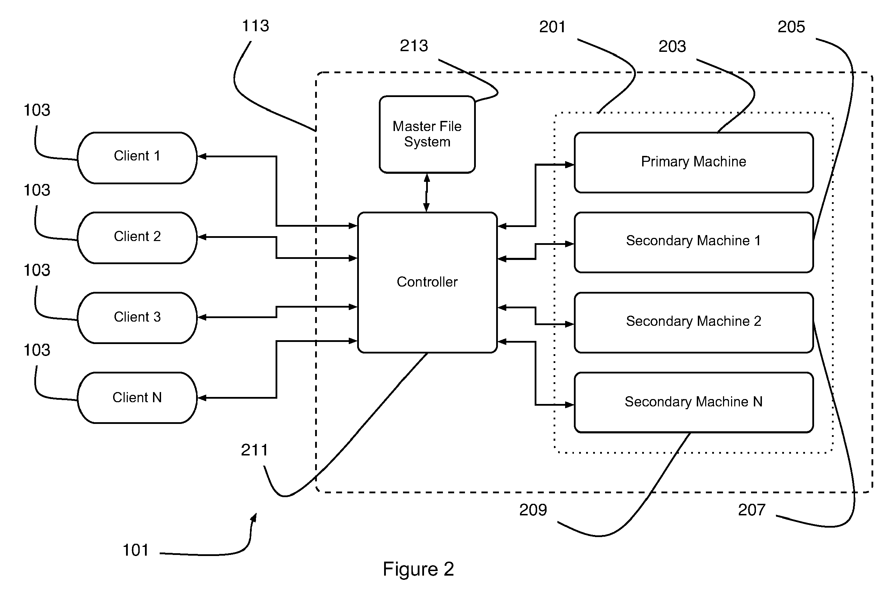

With reference to figure 2, one of the server computers 113 has server software which is implemented using virtualization software so as to provide a set of virtual servers. Each virtual server is operable to perform in the same way as the standard server software but at any point in time, only one virtual server in the set is active and receives new communications from the client computers 103. After a user-defined switch-over period, a new virtual server is activated and the, now old, active server is arranged to shut down and thereby eliminate any modifications a hacker may have made. The new virtual server takes the place of the old virtual server to enable a continuous provision of the server application. By limiting the lifetime of virtual servers, their vulnerability and value to hackers is reduced. The virtual servers and their changeover is transparent to the clients 103 using the server application.

The server computer 113 provides the hardware component that runs the virtualization software 201 in the form of User Mode Linux (UML) which runs multiple separate instances of operating systems on the same physical hardware. UML is arranged to create and run virtual machines (VM) in the form of Linux servers which each execute server application software. Four such VMs 203, 205, 207, 209 are illustrated in figure 2. The server 113 also comprises a controller 211 which governs access to VMs by the client computers 103 and which controls the switch-over period. The server 113 further comprises a master file system 213 which holds a complete copy of the software needed to create the VMs, including the binaries of the Linux operating system and the server application software.

The controller 211 manages access to the VMs to ensure that at any given time, only one VM is active and receiving new client requests. The active VM is referred to as the primary machine 203 and is only active for the switch-over period. Once this period has elapsed, the controller designates the current primary machine as a secondary machine and starts a new primary machine from the copy of the software in the master file store 213. The controller then routes subsequent client requests to the new primary machine. The secondary machines 205, 207, 209 are arranged to continue processing long-running client requests which they had not completed while designated as the primary machine. In other words, the requests had not been completed at the end of the switch-over period. Once a secondary machine has completed its outstanding client requests, or after a cut-off period, the machine is stopped by the controller 211 and its resources are released. If the cut-off period is set longer than the switch-over period, there may be multiple secondary machines as shown in figure 2. If the cut-off period is set shorter than or equal to the switch-over period, there will never be more than one secondary machine.

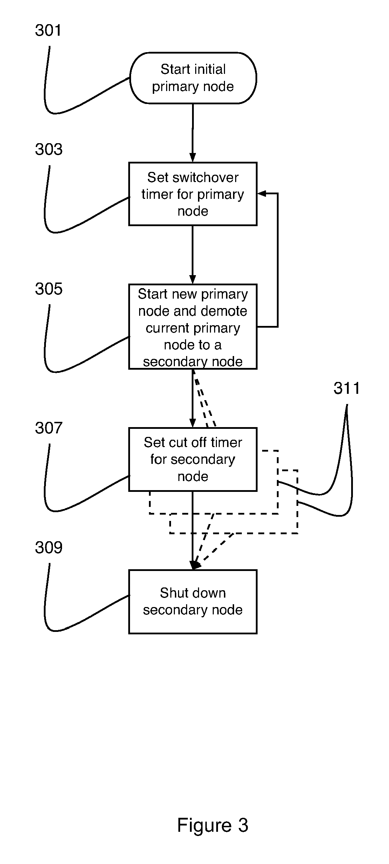

The processing carried out by the controller 211 will now be described further with reference to the flow chart of figure 3. At step 301, the controller 211 creates and boots a VM from the master file system image 213. This first VM, also referred to as first machine, is the primary machine and the controller routes all client requests to it. At this stage there are no secondary VMs processing long running client requests. Processing then moves to step 303 where the controller starts the switch-over timer to a predetermined time of 30 minutes.

Once the switch-over period has elapsed, processing moves to step 305 where the controller creates and boots an additional VM, also referred to as second machine, from the master file-system image and routes all subsequent new client requests to that node. In other words, the new or second VM becomes the primary machine, and the previous primary machine (first machine) is designated as a secondary machine. The processing of the new primary machine (also referred to as second machine, as it was started after the first machine and succeeds the first machine as primary machine) then returns to step 303 and continues as described above. The processing of the new secondary machine then moves to step 307.

Steps 301 and 303 establish a first instance of the server process and steps 305 and 303 establish a second instance of the server process.

At step 307, the controller sets a cut-off timer for the new secondary node of 90 minutes. The secondary machine continues to run as long as it processes requests from long-running clients, or until period set in the cut-off timer elapses and processing moves to step 309. At step 309, the controller stops the secondary machine and releases its resources to the system. As shown in figure 3 by processing steps 311, a number of secondary machines may be running at any given time. As noted above the relative lengths of the switch-over and cut-off period govern the maximum number of secondary nodes running at any given time.

If a hacker manages to gain unauthorized access to the primary machine, then once the switch-over period has elapsed, the controller process turns the primary machine into a secondary one, and creates a new primary machine from the master file-system image. The secondary machine that is created in this switch-over step then runs for the cut-off period at most and is then stopped and finally destroyed. This mechanism erases any defaced Web pages, hacking tools, backdoors, piracy software, or unwanted material a hacker may have placed on the VM. The new primary machine is clean and safe to use as it was booted from the master file-system image and therefore has not been compromised. Therefore, for some hackers, the work required to constantly re-access a server and set it up in the desired way (i.e. with all the backdoors, piracy software, etc.) will be less worthwhile. The switching of VMs and their provision of the application program is transparent to the clients of the application program. Moreover, any program or service that can be run by a VM can utilize the techniques described above and be made more robust when attacked.

In some embodiments a forensics procedure is carried out on the data and programs of each secondary node that has been stopped by the controller. The forensics procedure is arranged to detect any compromise of the integrity or security of the VM. The results of this procedure may used to modify the master image of the VM so as to remove any detected vulnerability. The forensics procedure may run an intrusion detection program such as Tripwire^{™} to determine if key system, configuration, or application files have been modified; test if new accounts have been created or the host-based firewall rules have been modified; determine if the secondary machine stores unfamiliar files or programs; or investigate the log files to determine if illegal network connections existed for the secondary machine.

In other embodiments, each machine is arranged to keep a registry of all executed binaries. This is implemented by hashing all binaries before executing them and storing these hashes. With this added functionality the forensics procedure can check if unauthorized binaries (i.e. binaries whose hashes are not approved by the security policy) have been executed which indicates that the machine has been compromised.

In some embodiments, if a compromise has been detected the forensics procedure is arranged to collect forensic evidence (including all available log files, configuration files, and memory dumps). This evidence can be used by human experts to analyze the compromise and develop a patch for the underlying vulnerability.

In another embodiment, if the forensics procedure determines that a particular file or the host-based firewall system has been modified in a malicious manner, then the master file system image is updated from a clean copy in order to protect new machines from such changes. Such steps may either be executed automatically or with human intervention. Similarly, the system may be arranged to check for available security patches and automatically apply them to the master file system image.

In some embodiments, the controller and/or each VM include an intrusion detection system and the switch-over period ends immediately if any intrusion is detected. For example, switch-over can be triggered after the Tripwire^{™} system has detected an unauthorized modification to a file. Alternatively, switch-over can be triggered after a host-based firewall reports a new outgoing connection which is against the firewall policy for the firewall.

In other embodiments, the switch-over period is set dynamically to take past compromises into account. Let *ti* be the current switch-over period, let *a* be a constant larger than 1, and let *tmin* and *tmax,* with 0 ≤ *tmin* < *tmax,* be a minimum and maximum switch-over periods (*tmax* = ∞ is possible). Then calculate *ti*+*1* according to the following algorithm:
**IF** (a compromise was detected the last time the forensics process was run)
**THEN** ti+1 := max(ti / a, tmin);
**ELSE** ti+1 := min(ti * a, tmax).

In further embodiments, the cut-off period is varied in accordance with the type of application server being run. For example, web servers mostly run short requests, therefore the cut-off period may be set to a small constant value such as five minutes.

In other embodiments, such as those for database and transaction processing servers, the runtime of requests might be less predictable. Therefore, the cut-off period is set dynamically, for example to the average request processing time plus three standard deviations.

In some embodiments, a plurality of physical machines or processors is used to run each instance of the server application program, under the overall control of a controller or a group of co-operating controllers.

It will be understood by those skilled in the art that the apparatus that embodies a part or all of the present invention may be a general purpose device having software arranged to provide a part or all of an embodiment of the invention. The device could be a single device or a group of devices and the software could be a single program or a set of programs. Furthermore, any or all of the software used to implement the invention can be communicated via various transmission or storage means such as computer network or storage device so that the software can be loaded onto one or more devices.

While the present invention has been illustrated by the description of the embodiments thereof, and while the embodiments have been described in considerable detail, it is not the intention of the applicant to restrict or in any way limit the scope of the appended claims to such detail. Additional advantages and modifications will readily appear to those skilled in the art. Therefore, the invention in its broader aspects is not limited to the specific details representative apparatus and method, and illustrative examples shown and described. Accordingly, departures may be made from such details without departure from the spirit or scope of applicant's general inventive concept.

## Claims

1. A method for managing a server process in a computer system (101), said method comprising the steps of:
a) running a first instance (301, 303) of a server process on a first machine (203/301);
b) routing communications from client processes to said first machine (203/301);
c) starting a second instance (305, 303) of said server process on a second machine (203/305); and
d) routing subsequent communications from client processes to said second machine (203/305) after a period of running of said first instance (301, 303) by said first machine (203/301).

2. A method according to any preceding claim in which each said instance of said server process is provided by a virtual application server (113).

3. A method according to any preceding claim in which each said machine is a virtual machine (203/301, 305).

4. A method according to any of claims 1 or 2 in which each said machine comprises one or more physical processors.

5. A method according to any preceding claim in which step d) is triggered when a predetermined switch-over period has elapsed.

6. A method according to claim 5 in which said switch-over period is determined randomly.

7. A method according to any preceding claim in which said server (113) or said first and second machines (203/301, 305) are monitored for unauthorized activity and step d) is triggered by the detection of any such activity.

8. A method according to claim 7 comprising the further steps of:
c) starting a third instance of said server process on a third machine; and
d) re-routing subsequent communications from client processes to said third machine after a period determined by the time taken for said detection of unauthorized activity on said first machine.

9. A method according to any preceding claim comprising the further step of stopping said first instance (301, 303) of said server process after step d).

10. A method according to claim 9 in which said first machine (203/301) is also stopped.

11. A method according to any of claims 9 to 10 in which once a server process or machine is stopped its related data and files are analyzed to detect unauthorized activity.

12. A method according to any preceding claim in which, after step d) said first instance (301, 303, 307, 309) of said server process is allowed to complete existing client communications prior to ceasing processing.

13. A method according to any preceding claim in which, after step d) said first instance (301, 303, 307, 309) of said server process is allowed to continue processing existing client communications for a cut-off period.

14. A method according to claim 13 in which said cut-off period is predetermined.

15. A method according to claim 13 in which the length of said cut-off period is determined randomly.

16. A method according to claim 13 in which the cut-off period is derived from the average processing time of client communications.

17. A method of running a server program, said method comprising the steps of:
a) running a first instance (301, 303) of a server program on a first virtual machine (VM) (203/301) and routing communications from client processes to said first VM (203/301); and
b) starting a second instance (305, 303) of said server program on a second VM (203/305) and after a predetermined period re-routing subsequent communications from client processes to said second VM (203/305).

18. Apparatus for managing a server process in a computer system (101), said apparatus comprising:
a first machine (203/301) for running a first instance (301, 303) of a server process;
a controller (211) operable to route communications from client processes to said first machine (203/301);
a second machine (203/305) for running a second instance (305, 303) of said server process subsequent to said first instance (301, 303); and
said controller (211) being further operable to route subsequent communications from client processes to said second machine (203/305) after a period of running of said first instance (301, 303) by said first machine (203/301).

19. A computer program comprising instructions for carrying out the methods according to any one of claims 1 to 17 when said computer program is executed on a computer system (101).
